# EUROPEAN PATENT APPLICATION

(11) **EP 2 143 783 A1**
(43) Date of publication of application: **13.01.2010**
(21) Application number: 09011990.0
(22) Date of filing: 12.05.2004
(51) Int. Cl.: C11C 3/00, C11B 5/00, A23D 9/007

(54) **Antioxidant fat or oil composition containing long-chain highly unsaturated fatty acid**

(30) Priority: 09.07.2003 JP 2003193980
(62) Divisional of application: 04732428.0
(71) Applicant: J-Oil Mills, Inc., Tokyo 104-0044 (JP)
(72) Inventor: Mori, Osamu, Yokohama-shi, Kanagawa 230-0053 (JP); Tashima, Ikukazu, Yokohama-shi, Kanagawa 230-0053 (JP); Matsuzaki, Narihide, Yokohama-shi, Kanagawa 230-0053 (JP)
(74) Representative: Strehl Schübel-Hopf & Partner

(57) **Abstract**

The purpose of the present invention is to provide a fat or oil composition that can be protected from the off-flavor of the fish oil for a long period of time, and can be used in usual cooking without any problems.

Thus, the present invention is related to a fat or oil composition comprising oleic acid of 5∼40 parts by weight, preferably 8∼35 parts by weight, linolic acid of 10∼60 parts by weight, preferably 12∼45 parts by weight and linolenic acid of 0.9∼1.6 parts by weight, or 0.2∼3 parts by weight per one part by weight of long-chain highly unsaturated fatty acids.

## Description

### Technical Field

The present invention relates to an antioxidant fat or oil composition comprising a long-chain highly unsaturated fatty acid, especially EPA and/or DHA, and to a method for the preparation thereof.

### Background of the Invention

Long-chain highly unsaturated fatty acids such as, for example, eicosapentaenoic acid (referred to as "EPA") and docosahexaenoic acid (referred to as "DHA") have various physiological activities, and a lot of study have been done for their functions. However, they have a disadvantage that they are liable to get oxidized. Further, they will produce unfavorable taste from a sensory point of view during storage, which is peculiar to these fatty acids and called "off-flavor" during storage. Their application has therefore been limited to a gelatin capsule such as healthy foods, canned products, etc.

Methods for avoiding deterioration of fat or oil containing a large amount of the long-chain highly unsaturated fatty acids have been developed by utilizing the addition of a combination of an antioxidant, an oxidation inhibitor, and an agent for synergetic anti-oxidation. For example, the Japanese Patent Application laid open Hei 2 (1990)-208390 disclosed an antioxidant composition comprising phospholipid and tocopherol as an effective component, and the Japanese Patent Application laid open Hei 2 (1990)-55785 disclosed an antioxidant composition comprising green tea extract, tocopherol, an ester of L-ascorbic acid and the like.

Furthermore, the Japanese Patent Application laid open Hei 5 (1993)-140584 (Japanese Patent No.338075: Patent Document No.1) disclosed a method for suppressing the off-flavor of polyunsaturated fatty acids by addition of tocopherol, esters of L-ascorbic acid and palmitic acid, and lecithin mixture. The Japanese Patent Application laid open Hei 9 (1997)-263784 (Patent Document No.2) disclosed fat or oil containing polyunsaturated fatty acids, whose odor was suppressed by δ- tocopherol and an ester of L-ascorbic acid comprised therein. The Japanese Patent Application laid open Hei 11 (1999)-299420 (Patent Document No.3) disclosed a DHA-containing fat or oil composition comprising olive oil, tocopherol and ascorbic acid.

However, the effect against the off-flavor of fish oil that was obtained in the above inventions is just temporary, and is not enough.

On the other hand, methods concerning a masking agent have been disc losed, which use various extracts, for example, a method using oil-soluble ginger flavor (the Japanese Patent Application laid open Hei 6 (1994)-189717), a method using spice extract from labiatae, rose apple and lauraceae (the Japanese Patent Application laid open Hei 7 (1995)-236418), a method using extract from leaves of nandia and vitamin C (the Japanese Patent Application laid open Hei 8 (1996)-239685), and a method using lemon oil (the Japanese Patent Application laid open Hei 8 (1996)-275728). However, these formulations as well as the antioxidant had to be added to the fat or oil under inactive gas immediately after deodorization. They have therefore some problems in terms of workability and commercial value such as the problem of insolubility that would sometimes occur.

Methods for changing structure or properties of the fat or oil containing highly unsaturated fatty acids per se were disclosed so as to improve stability of the fat or oil per se and utilize them in foods. For example, ester -exchange technique between fish oil and fat or oil having antioxidative stability such as solid or hydrogenated fat was disclosed in the Japanese Patent Applications laid open Hei 6 (1994)-287593, Hei 7 (1995)-308153 and Hei 8 (1996)-269447, and a method for improving antioxidative stability of fish oil by slight hydrogenation in the Japanese Patent Applications laid open Hei 7 (1995)-216383, Hei 7 (1995)-264985, Hei 7 (1995)-268385, and Hei 7 (1995)-274826.

Thus, it has been conceived that for maintaining stability of flavor of the long-chain highly unsaturated fatty acids such as EPA and DHA it is important to decrease the number of double bonds in a triglyceride or in the whole fatty acids constituting the fat or oil by means of ester exchange with a triglyceride of medium-chain fatty acids, saturated or mono-saturated fat or oil (for example, palm oil) having a high antioxidative stability, or by means of the slight hydrogenation of the fish oil per se.

However, the above procedures would make the fat or oil become a solid state at a room temperature, limiting its application and usage in foods. Furthermore, when the fish oil was slightly hydrogenated, EPA and DHA themselves would be reduced with a significant decrease of their physiological activities.
Patent Document No.1: Japanese Patent Application laid open Hei 5 (1993)-140584
Patent Document No.2: Japanese Patent Application laid open Hei 9 (1997)-263784
Patent Document No.3: Japanese Patent Application laid open Hei 11 (1999)-299420

### Problem to be solved by the Invention

It has been therefore desired to provide a fat or oil composition that shall be protected from the off-flavor of the fish oil for a long period of time, and can be used in usual cooking without any problems. The purpose of the present invention is to provide such fat or oil composition.

The present inventors have studied to solve the above problems, and found that it is possible to simply but efficiently suppress the off-flavor (fishy odor) and to maintain favorable taste from a sensory point of view for a long period of storage time by causing a given amount of easily oxidizable polybasic unsaturated fatty acid other than long-chain highly unsaturated fatty acid such as EPA or DHA to be positively contained to thereby attain a fat or oil mixing at specified fatty acid ratio without using any particular antioxidant.

### Means for solving the Problem

Thus, the present invention relates to a fat or oil composition comprising oleic acid of 3∼9 parts by weight, preferably 3∼7 parts by weight, linolic acid of 5∼15 parts by weight, preferably 6∼10 parts by weight and linolenic acid of 0.1∼1.5 parts by weight, preferably 0.5∼1.5 parts by weight per one part by weight of long-chain highly unsaturated fatty acids. The composition having the fatty acid ratio in the above range preferably comprises the long-chain highly unsaturated fatty acids of 3∼7 % by weight of the whole fatty acids composition. In case the long-chain highly unsaturated fatty acids of more than 7% by weight are comprised, suppressing of the off-flavor shall not be sufficiently effected, being unfavorable from a sensory point of view.

The present invention is further relates to a fat or oil composition comprising oleic acid of 5∼40 parts by weight, preferably 8∼35 parts by weight, linolic acid of 10∼60 parts by weight, preferably 12∼45 parts by weight and linolenic acid of 0.1∼4 parts by weight, preferably 0.2∼3 parts by weight per one part by weight of long-chain highly unsaturated fatty acids. The composition having the fatty acid ratio in the above range preferably comprises the long-chain highly unsaturated fatty acids of 1∼3 % by weight of the whole fatty acids composition.

The "long-chain highly unsaturated fatty acid" in the present specification means n-3 fatty acids having 20 or more of carbon atoms and 3 or more of double bonds.

If the above particular ratio of the fatty acids is satisfied, the fat or oil composition with a high taste stability shall be obtained, and its favorable taste from a sensory point of view can be maintained for a long period of storage time.

### The Advantages of the Invention

According to the present invention, it is possible to simply but efficiently suppress the off-flavor (fishy odor) and to maintain favorable taste from a sensory point of view for a long period of storage time by causing a given amount of easily oxidizable polybasic unsaturated fatty acid other than long-chain highly unsaturated fatty acid such as EPA or DHA to be positively contained to thereby attain a fat or oil mixing at specified fatty acid ratio without using any particular antioxidant.

### The Best Mode for Carrying out the Invention

EPA and/or DHA may be mentioned as representative examples of the long-chain highly unsaturated fatty acids according to the present invention. There is no limitation on their origin. Those skilled in the art may optionally use those derived from various animals and vegetables, bacteria and algae that are commercially available. Among them, fish oil, especially condensed EPA and DHA oil (purified fish oil) derived from bonito or tuna is preferable in terms of purity and cost. The fat or oil composition of the present invention may comprise two or more kinds of the long-chain highly unsaturated fatty acids.

The oleic acid and linolic acid used in the present invention may be any one known to those skilled in the art, usually those contained in various fat or oil as a constituting fatty acid of triglyceride. They include vegetable oil such as corn oil, sunflower oil, safflower oil and wheat germ oil. Any two or more kinds of the above oil may be optionally mixed and used. Corn oil is most preferable in terms of both cost and the fatty acid composition.

The linolenic acid used in the present invention may be any one known to those skilled in the art, usually those contained in various fat or oil as a constituting fatty acid of triglyceride. They include vegetable oil such as flax seed oil, perilla oil, rape seed oil and soybean oil, flax seed oil being most preferable in terms of the fatty acid composition

There is no limitation on how to prepare the fat or oil composition according to the present invention. For example, it may be prepared by choosing one or more kinds of the above oil and appropriately mixing or blending them. Especially, the fat or oil composition prepared by mixing purified fish oil, corn oil and flax seed oil is preferable.

The weight % of EPA, DHA, oleic acid, linolic acid and linolenic acid was determined based on the weight % calculated from a percentage ratio in accordance with the ratio of chromatogram peak area that was obtained in gas-chromatograph (GLC) analysis according to Standard Methods for the Analysis of Fats, Oils and Related Materials 3.2.3 -1996.

As already described, the present invention shows the advantages that the favorable taste from a sensory point of view will be kept stably for a long period of storage time by satisfying the particular fatty acid ratio. No particular antioxidant is needed to be added to the present fat or oil composition in order to obtain the above advantages. It is, however, possible to optionally add an antioxidant or oxidation inhibitor known to those skilled in the art, such as tocopherol, ester of ascorbic acid, rosemary extract, green tea extract and licorice extract; a metal chelator such as citric acid and malic acid; an emulsifier such as glycerin fatty acid esters, sucrose fatty acid esters and lecithin; and an antifoamer such as silicon oil to the fat or oil composition for the purpose of improving its stability against oxidization and heating. The antioxidant may be usually added at a ratio of 0.005∼0.2 % by weight. The fat or oil composition according to the present invention may be used widely in general cooking except deep-frying.

Peroxide value (POV) may be used as an index for degree of the oxidation of fats and oils. This value is obtained by reacting hydroperoxide produced by incorporation of oxygen in the air into the fat or oil with potassium iodide, and tittering an amount of released iodine with sodium thiosulfate solution. It is expressed with a unit of milli-eqivalent per 1 kg of a sample (meq/kg). It is one of the features of the present invention that there is no clear relationship between the POV and the unfavorable taste from a sensory point of view, i.e., the off-flavor. Accordingly, the advantages of the present invention shall be evaluated by the ratio of the fatty acids comprised in the composition of the present invention and a sensory test.

The "unfavorable taste from a sensory point of view" according to the present invention means the off-flavor (fishy odor) represented by, for example, 2,4,7-decatrienal. The unfavorable taste may be evaluated according to the sensory test described in the examples and comparative examples in the present specification.

### Examples

The present invention will be explained with reference to the examples and comparative examples, which should not be construed in any way to limit the scope of the present invention. The "%" in the following examples means "% by weight."

### (Examples 1 and 2, Comparative examples 1, 2, 3 and 4)

Purified fish oil containing DHA of 26.7% and EPA of 8.3%, purified corn oil containing oleic acid of 28.8% and linolic acid of 45.5%, and purified flax seed oil containing linolenic acid of 39.8% were homogeneously blended at various ratios described in Table 1.

### (Comparative Example 5)

Purified fish oil containing DHA of 26.7% and EPA of 8.3%, purified high-oleic safflower oil containing oleic acid of 77.4%, purified safflower oil containing linolic acid of 77.3%, and purified flax seed oil containing linolenic acid of 39.8% were homogeneously blended at various ratios described in Table 1.

**TABLE 1**

| Comparative Examples | | | | | | | Examples | |
|---|---|---|---|---|---|---|---|---|
| | | No.1 | No.2 | No.3 | No.4 | No.5 | No.1 | No.2 |
| Blending ratio (%) | Purified fish oil | 15.00 | 15.00 | 15.00 | 15.00 | 21.00 | 15.00 | 15.00 |
| | Purified corn oil | 0.00 | 21.25 | 42.50 | 63.75 | 0.00 | 74.38 | 85.00 |
| | Purified flax seed oil | 85.00 | 63.75 | 42.50 | 21.25 | 3.95 | 10.63 | 0.00 |
| | Purified high-oleic safflower oil | 0.00 | 0.00 | 0.00 | 0.00 | 15.80 | 0.00 | 0.00 |
| | Purified safflower oil | 0.00 | 0.00 | 0.00 | 0.00 | 59.25 | 0.00 | 0.00 |
| Fatty Acid Composition (%) | DHA | 4.4 | 4.4 | 4.5 | 4.4 | 1.7 | 4.4 | 4.3 |
| | EPA | 1.1 | 1.1 | 1.2 | 1.1 | 5.6 | 1.1 | 1.1 |
| | Oleic acid | 20.2 | 22.2 | 23.9 | 25.8 | 23.7 | 26.8 | 28.8 |
| | Linolic acid | 14.1 | 22.4 | 30.2 | 38.5 | 49.1 | 42.3 | 45.5 |
| | Linolenic acid | 39.8 | 30.3 | 20.3 | 10.8 | 2.1 | 5.9 | 1.0 |
| Ratio per 1 Part by weight of EPA and/or DHA | EPA and/or DHA | 1 | 1 | 1 | 1 | 1 | 1 | 1 |
| | Oleic acid | 3.7 | 4.0 | 4.2 | 4.7 | 3.2 | 4.8 | 5.3 |
| | Linolic acid | 2.6 | 4.0 | 5.3 | 7.0 | 6.7 | 7.6 | 8.3 |
| | Linolenic acid | 7.2 | 5.5 | 3.6 | 2.0 | 0.3 | 1.1 | 0.2 |

Each composition (10g) was taken into a deep petri dish with 7.4cm in inside diameter and 3.7cm in depth, kept in an open oven at 60 °C and subjected to the sensory test to evaluate their smell. The test was done in accordance with 5-grade evaluation shown in Table 2 based on an average value of four panelists (n=4).

**Table 2**

| Grade | Standard of valuation |
|---|---|
| ⊚ | almost tasteless and odorless |
| ○ | slight fishy odor (off-flavor) |
| Δ | clear fishy odor (off-flavor) |
| × | strong putrefying odor (strong off-flavor), hesitating to put into mouth |
| ×× | terrible flavor, not suitable for eating |

The results of evaluation shown in Table 3 demonstrate that the suppression of the off-flavor would not be significantly effected if the fatty acid ratio to EPA and/or DHA did not satisfy the desired requirements. Furthermore, in the case that the ratio of the long-chain highly unsaturated fatty acids was more than 7 % or more of the whole fatty acids, the suppression of the off-flavor would not be significantly effected even if a total weight of oleic acid, linolic acid and linolenic acid was appropriate.

**Table 3**

| | Storage Days | | | | | |
|---|---|---|---|---|---|---|
| Sample | 0 | 2 | 4 | 6 | 8 | 10 |
| Comparative Ex.1 | ⊚ | ○ | Δ | Δ | × | × |
| Comparative Ex.2 | ⊚ | ○ | Δ | Δ | × | × |
| Comparative Ex.3 | ⊚ | ○ | Δ | Δ | × | × |
| Comparative Ex.4 | ⊚ | ⊚ | ○ | Δ | Δ | Δ |
| Comparative Ex.5 | ⊚ | Δ | × | × × | × × | × × |
| Example 1 | ⊚ | ⊚ | ⊚ | ○ | ○ | ○ |
| Example 2 | ⊚ | ⊚ | ⊚ | ○ | ○ | ○ |

### (Example 3)

An antioxidant of green tea extract manufactured by Sankyo Lifetech co.,Ltd., SUNFOOD (Yusei) was added to the fat or oil composition of Example 1 at the ratio of 0.1 % under nitrogen gas at 60°C and completely solved therein.

### (Example 4)

An antioxidant of rosemary extract manufactured by Mitsubishi Chemical Ltd., RM21B) was added to the fat or oil composition of Example 1 at the ratio of 0.01 %, under nitrogen gas at 60°C and completely solved therein.

Each composition (10g) of Examples 3 & 4 was taken into a deep petri dish with 7.4cm in inside diameter and 3.7cm in depth, kept in an open oven at 60°C and subjected to the sensory test to evaluate its smell. The test was done in accordance with 5-grade evaluation shown in Table 2 based on an average value of four panelists (n=4). As seen from the results of evaluation in Table 4, the addition of the antioxidant did not cause any significant change from Example No.1 in the suppressing effect of the fishy odor or off-flavor, and did not deteriorate the same effect from a sensory point of view, either. But if oxidative deterioration is monitored by a chemical index, an improving effect may be expected with the addition of the antioxidant.

**Table 4**

| | Storage Days | | | | | |
|---|---|---|---|---|---|---|
| Sample | 0 | 2 | 4 | 6 | 8 | 10 |
| Example 3 | ⊚ | ⊚ | ⊚ | ○ | ○ | ○ |
| Example 4 | ⊚ | ⊚ | ⊚ | ⊚ | ○ | ○ |

### (Examples A, B and C)

Purified fish oil containing DHA of 23% and EPA of 7%, purified corn oil containing oleic acid of 28.8% and linolic acid of 45.5%, and purified flax seed oil containing linolenic acid of 39.8% were homogeneously blended at various ratios described in Table 5.

### (Comparative Example D)

Purified fish oil containing DHA of 23% and EPA of 7%, purified high-oleic safflower oil containing oleic acid of 77.4% were homogeneously blended at various ratios described in Table 5.

**Table 5**

| Examples | | | | | Comparative Example |
|---|---|---|---|---|---|
| Blending ratio (%) | | A | B | C | D |
| | Purified fish oil | 3.30 | 5.70 | 9.80 | 3.30 |
| | Purified corn oil | 92.70 | 90.30 | 86.20 | 0.00 |
| | Purified flax seed oil | 4.00 | 4.00 | 4.00 | 0.00 |
| | Purified high-oleic safflower oil | 0.00 | 0.00 | 0.00 | 96.70 |
| Fatty Acid Composition (%) | DHA | 0.76 | 1.31 | 2.25 | 0.76 |
| | EPA | 0.23 | 0.40 | 0.68 | 0.23 |
| | Oleic acid | 26.7 | 26.0 | 24.8 | 74.8 |
| | Linolic acid | 42.1 | 41.0 | 39.2 | 1.5 |
| | Linolenic acid | 1.6 | 1.6 | 1.6 | 1.0 |
| Ratio per 1 Part by weight of EPA and/or DHA | EPA and/or DHA | 1 | 1 | 1 | 1 |
| | Oleic acid | 27.0 | 15.2 | 8.5 | 75.6 |
| | Linolic acid | 42.5 | 24.0 | 13.4 | 1.5 |
| | Linolenic acid | 1.6 | 0.9 | 0.5 | 1.0 |

Each composition (10g) of Examples A∼C and Comparative Example D was taken into a deep petri dish with 7.4cm in inside diameter and 3.7cm in depth, kept in an open oven at 60°C and subjected to the sensory test to evaluate their odor. The test was done in accordance with 5-grade evaluation shown in Table 2 based on an average value of four panelists (n=4). The results of evaluation shown in Table 6 demonstrate that the suppression of the off-flavor would not be significantly effected if the fatty acid ratio of to EPA and/or DHA did not satisfy the desired requirements.

**Table 6**

| | Storage Days | | | | | |
|---|---|---|---|---|---|---|
| Sample | 0 | 2 | 4 | 6 | 8 | 10 |
| Example A | ⊚ | ⊚ | ⊚ | ⊚ | ⊚ | ○ |
| Example B | ⊚ | ⊚ | ⊚ | ⊚ | ○ | ○ |
| Example C | ⊚ | ⊚ | ⊚ | ○ | ○ | ○ |
| Comparative Ex.D | ⊚ | ○ | Δ | Δ | × | × |

The present application covers the following embodiments:
[1] A fat or oil composition comprising oleic acid of 3-9 parts by weight, linolic acid of 5-15 parts by weight, and linolenic acid of 0.1-1.5 parts by weight per one part by weight of long-chain highly unsaturated fatty acids.
[2] A fat or oil composition comprising oleic acid of 3-7 parts by weight, linolic acid of 6-10 parts by weight, and linolenic acid of 0.5-1.5 parts by weight per one part by weight of long-chain highly unsaturated fatty acids.
[3] A fat or oil composition according to [1] or [2], wherein a ratio of the long-chain highly unsaturated fatty acids is 3-7 % by weight of the whole fatty acid composition.
[4] A fat or oil composition comprising oleic acid of 5-40 parts by weight, linolic acid of 10-60 parts by weight, and linolenic acid of 0.1-4 parts by weight per one part by weight of long-chain highly unsaturated fatty acids.
[5] A fat or oil composition comprising oleic acid of 8-35 parts by weight, linolic acid of 12-45 parts by weight, and linolenic acid of 0.2-3 parts by weight per one part by weight of long-chain highly unsaturated fatty acids.
[6] A fat or oil composition according to [4] or [5], wherein a ratio of the long-chain highly unsaturated fatty acids is 1-3 % by weight of the whole fatty acid composition.
[7] A fat or oil composition according to any one of [1]-[6], wherein the long-chain highly unsaturated fatty acids are EPA and/or DHA.
[8] A fat or oil composition according to any one of [1]-[7], wherein an antioxidant is not added.
[9] A fat or oil composition according to any one of [1]-[7], which comprises an antioxidant of 0.005-0.02 % by weight.
[10] A fat or oil composition according to any one of [1]-[9], which is a liquid state at 5°C.
[11] A fat or oil composition according to any one of [1]-[10], which is prepared from flax seed oil, corn oil or purified fish oil.

## Claims

1. A fat or oil composition comprising oleic acid of 5-40 parts by weight, linolic acid of 10-60 parts by weight, and linolenic acid of 0.9-1.6 parts by weight per one part by weight of long-chain highly unsaturated fatty acids.

2. A fat or oil composition comprising oleic acid of 8-35 parts by weight, linolic acid of 12-45 parts by weight and linolenic acid of 0.2-3 parts by weight per one part by weight of long-chain highly unsaturated fatty acids.

3. A fat or oil composition according to claim 1 or 2, wherein a ratio of the long-chain highly unsaturated fatty acids is 1-3 % by weight of the whole fatty acid composition.

4. A fat or oil composition according to any one of claims 1-3, wherein the long-chain highly unsaturated fatty acids are EPA and/or DHA.

5. A fat or oil composition according to any one of claims 1-4, wherein an antioxidant is not added.

6. A fat or oil composition according to any one of claims 1-4, which comprises an antioxidant of 0.005-0.02 % by weight.

7. A fat or oil composition according to any one of claims 1-6, which is a liquid state at 5°C.

8. A fat or oil composition according to any one of claims 1-7, which is prepared from flax seed oil, corn oil or purified fish oil.
